# EUROPEAN PATENT APPLICATION

(11) **EP 2 377 913 A1**
(43) Date of publication of application: **19.10.2011**
(21) Application number: 11003140.8
(22) Date of filing: 14.04.2011
(51) Int. Cl.: C10M 161/00, C10M 169/04, B29C 33/60

(54) **Lubricating composition for die casting comprising carbonic acid ester**

(30) Priority: 14.04.2010 IT MI20100629
(71) Applicant: Foundry Chem, 10155 Torino (IT)
(72) Inventor: Rizzuto, Gianni, 10155 Torino (IT); Bucelli, Fiorenzo, 10155 Torino (IT); Sciaccaluga, Marco, 10155 Torino (IT); Mendizabal, Joannes, 10155 Torino (IT); Benitez, Manuel, 10155 Torino (IT)
(74) Representative: Contessini, Pier Carlo

(57) **Abstract**

This application relates to a substantially anhydrous form composition for use in a casting process, said composition comprising:
a) at least a carbonic ester, having a dynamic viscosity in the range between 3 and 90 mm²/sec when measured at 40 °C;
b) at least an organic acid, saturated or unsaturated, having from 12 to 22 carbon atoms;
c) at least a synthetic ester having a dynamic viscosity in the range between 25 and 90 mm²/sec when measured at 40 °C;
d) at least a silicon polymer-based resin;
and wherein said composition has:
- a dynamic viscosity in the range between 45 and 180 mm²/sec when measured at 40°C, and
- a flashpoint (COC) not lower than 250°C.

By this way, such a high flash point of the composition of the present invention allows to safely work with the mold at high temperatures of the mold itself, for example about 400 °C - 450 °C, without any fire danger.

## Description

The present invention relates to a composition useful in a die casting process and to the same process using such composition, in particular, this invention relates to a substantially anhydrous composition having a high flash point.

### Prior art

The term die casting is intended to mean a process whereby a melted alloy is poured into a generally metallic mold, by a casting machine (also briefly indicated as a "press"), wherein the term alloy is intended to mean an alloy mainly obtained by the combination of aluminum and copper, zinc, manganese, silicon, or magnesium, for example, zamak alloy, or other combinations in the absence of aluminum, such as for example, brass.

These presses operate in such a way the alloy is subjected to a pressure which causes the following concatenated effects: a) a very fast filling of the mold cavity, b) a total filling of said cavity, irrespective of the geometric shape of the cavity itself, c) assignment to the casting of a desired crystal structure and d) an additional alloy supply to compensate for the volume reduction of the alloy that, upon cooling during casting thereof, changes from liquid to solid state.

In a standard die casting process a very relevant water amount is used; in fact, one of the main actions is the mold cooling, which generally occurs by a release agent diluted in water.

In fact, the application of the release agent diluted in water has the primary function to cool the mold surface. The alloy is normally injected at 680-720 °C and the piece is removed at about 300-350 °C. The cooling circuits inside the molds (water circuits) allow to maintain their bulk at appropriate temperature levels suitable for the cycle (150-200 °C) but the temperatures found on the "skin" of the mold require an outside thermal exchange represented by the water carrying on the release agent. During delivery, mostly automated, the emulsion is sprayed on the mold, the water absorbs heat while evaporating and releases the active ingredients of the release agent itself.

Currently, according to the tonnage of each press, it takes on average about 2 liters of water for cooling and conveying the fluid release agents, for each cycle. Considering that the time for each cycle varies from 60 seconds to 120 seconds depending on the kind of production, about 800 liters of water per day, 15,000 liters per month are used on average for each press. Multiplied by the number of presses, only in Italy about 200,000 tons / year of water for production of castings are used.

It is therefore evidently needed to provide a substantially free of water composition which significantly reduces the water consumption and that at the same time enables to perform all necessary actions in a casting process. A reduced water consumption would also facilitate the problems related to the water recycling, the presence of fumes and resulting pollution.

The patent application EP 1818119 proposes to solve such a problem by a composition comprising: a) 70-98 parts by weight of a solvent having a flash point (COC), between 70 and 170 °C and a dynamic viscosity at 40 °C of 2-10 mm²/sec, b) 1-10 parts by weight of mineral oil and/or synthetic oil having a dynamic viscosity at 40 °C of at least 100 mm²/sec, c) 15 parts by weight or less of a silicon oil, and d) 1-5 parts by weight of additives having a lubricating function, wherein the flash point (COC) of the composition as a whole is 70-170 °C and the dynamic viscosity at 40 °C is 2 - 30 mm²/sec.

However, the solution proposed in said patent application has the disadvantage of having a flash point too low for the working conditions, with fire hazard when present in the anhydrous form, after water evaporation during its use, and a too low product viscosity herein referred to as "solvent", leading to an inevitable evaporation and dispersion into the working environment also associated and emphasized by the relevant amount of water evaporation. The most important consequence is the very poor hygiene environmental conditions.

It is thus strongly present the problem to realize a composition allowing the use of as less quantity of water as possible, as well as a product as such which allows to obtain at the same time both a good plant productivity and a high quality of manufacturing products, such as porosity and high thermal stability. These and other purposes, which will become more apparent from the following description, have been pursued by the Applicants of the present application which have in fact discovered that a composition as indicated in claim 1 is able to solve the above outlined problems.

In particular, in a first aspect, the present application refers to a substantially anhydrous form composition comprising:
- at least a carbonic ester, having a dynamic viscosity in the range between 3 and 90 mm²/sec when measured at 40 °C;
- at least a saturated or unsaturated organic acid, having a chain from 12 to 22 carbon atoms;
- at least one synthetic ester having a dynamic viscosity in the range between 25 and 90 mm²/sec when measured at 40 °C;
- at least a silicon polymer-based resin,
and wherein said composition has a dynamic viscosity in the range between 45 and 180 mm²/sec when measured at 40 °C and a flashpoint not lower than 250 °C. The term "substantially anhydrous composition" is intended to mean a water free composition, but containing a maximum moisture value of 1,000 mg / 1 (i.e., 1,000 parts per million).

Preferably, said composition has a flash point (COC) of at least 280 °C.

By this way, such a high flash point of the composition of the present invention allows to safely work with the mold even at high temperatures of the mold itself, for example at about 400 °C - 450 °C, without any fire danger.

In addition, such a high flash point of the composition of the present invention also allows to create a uniform layer of said composition even at said high temperatures, thus preventing the "Leidenfrost" effect, i.e. the micro welding formation, allowing even a perfect removal of the casting product.

The composition of the present invention, in addition to the fact of allowing to safely work with the mold at high temperatures of the mold, has the advantage of water consumption reduction in a casting process that utilizes such a composition, thus allowing the cost reduction related to wastewater treatment and to water consumption, and the reduction of the friction that the smelted alloy meets during mold filling.

Furthermore, the composition of the present invention allows to obtain improved final product qualities, for example, porosity and thermal stability, with relevant reduction of production waste.

Preferably, said composition has a dynamic viscosity in the range between 45 and 150 mm²/sec, more preferably between 50 mm²/sec and 130 mm²/sec when measured at 40 °C.

Preferably, said composition also has a viscosity index greater than or equal to 150, more preferably greater than 170, and a pour point greater than or equal to -10 °C, more preferably greater than - 8 °C.

By this way, such a viscosity index of the composition of the present invention allows a better stability in the casting process wherein the composition of the present invention is utilized with regards to the amount of the sprayed product.

Preferably, said carbonic acid ester comprised in the composition of the present invention has a dynamic viscosity in the range between 5 and 60 mm²/sec and more preferably between 10 and 50 when measured at 40 °C.

Preferably, said carbonic ester has a alcohol, linear or branched chain, having 12-50 carbon atoms, saturated or unsaturated. More preferably, said carbonic ester is represented by the general formula I:

O=C[-O-(CH₂)ₓ-CH₃]₂ (I)

wherein x is an integer ranging from 11 to 19.

Preferably, said carbonic ester comprised in the composition of the present invention is in 5-40, more preferably 10-35, parts by weight with respect to 100 parts by weight of the whole composition.

In a particular form, the composition of the present invention may also comprise a mixture of two or more of said carbonic esters.

Preferably, said organic acid comprised in the composition of the present invention is:
a) a saturated organic acid represented by general formula II:

   CH₃-(CH₂)_{y}-COOH (II)

   wherein y is an integer ranging from 11 to 21,
b) a monounsaturated organic acid, having 13 to 23 carbon atoms, or
c) a polyunsaturated organic acid, having from 13 to 23 carbon atoms.

Examples of saturated organic acids useful in the present invention may be, for example, myristic acid, palmitic acid, stearic acid, or mixtures thereof. Examples of monounsaturated organic acids useful in the present invention may be, for example, oleic acid or erucic acid, or mixtures thereof. Examples of polyunsaturated organic acids useful in the present invention may be, for example, linoleic acid or linolenic acid, or mixtures thereof.

Preferably, said organic acid is linoleic acid or linolenic acid, or mixtures thereof.

Preferably, said organic acid is comprised in the composition of the present invention in a 10-40, more preferably 15-35, still more preferably 20-30 parts by weight with respect to 100 parts by weight of the whole composition.

Preferably, said synthetic ester comprised in the composition of the present invention has a dynamic viscosity in the range between 30 and 75 mm²/sec when measured at 40°C.

Preferably, said synthetic ester is constituted by a branched or linear polyol having a chain of 3-6 carbon atoms and by an acyl, saturated or unsaturated, portion having at least a chain of 12-18 carbon atoms.

More preferably, said synthetic ester is represented by the general formula III:

C₄H₇[-O-CO-(CH₂)₂-CH₃]₃ (III)

wherein z is an integer ranging from 11 to 17.

Preferably, said synthetic ester is comprised in the composition of the present invention in a 15-60, more preferably 20-55, still more preferably 20-40 parts by weight with respect to 100 parts by weight of the whole composition.

In a particular form, the composition of the present invention may also comprise a mixture of two or more of such synthetic esters.

Preferably, said silicon polymer-based resin comprised in the composition of the present invention has a chain having from 50 to 400 silicon atoms, more preferably between 100 and 350 silicon atoms, still more preferably between 150 and 300 silicon atoms.

More preferably, said polymeric resin is based on organo-modified silicone polymers derived from polymerization reactions of alkoxysilanes and alkylalkoxysilanes. Still more preferably, said silicon polymer-based resin is represented by the general formula IV: 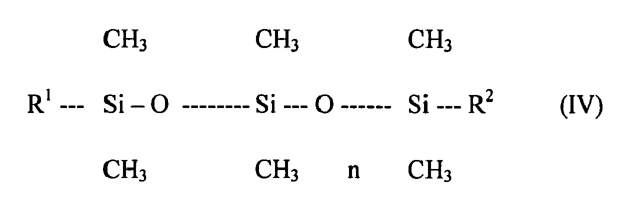 wherein n is an integer from 150 to 300 and R¹ and R² are independently one each other alkyl groups having from 2 to 10 carbon atoms.

The silicon presence in the composition of the present invention allows the composition itself to achieve better lubricating and releasing properties.

Preferably, said silicon polymer-based resin is comprised in the composition of the present in 15-40, more preferably 20-35, still more preferably 20-30 parts by weight with respect to 100 parts by weight of the whole composition.

In a particular form, the composition of the present invention may also include a mixture of two or more of said silicon polymer-based resins.

The composition of the present invention may be obtained by traditional preparation means. Preferably, said composition is obtained by adding the above cited ingredients that make it by mixing at a temperature in a range between 20 °C and 60 °C for a period of at least 3 hours, preferably at least 4 hours, using a suitable mixer.

In a second aspect, the present invention relates to a casting process comprising the steps of: a) delivering into a mold a composition as described above, b) injecting an alloy in said mold, c) opening said mold after the solidification of the alloy and of the composition of the present invention has been occurred, and d) removing the obtained cast.

Preferably, said alloy is a light aluminum, zamak or brass alloy.

Preferably, in step a) the delivery of the composition of the present invention is made by a sprayer able to create a very fine atomization of the composition of the present invention, creating droplets with diameters in the order of microns.

Preferably, said sprayer comprises mixing nozzles able to check the pressure of said composition and of the air independently one each other.

Preferably, said air pressure is lower than 3 bar, more preferably lower than 2 bar, more preferably lower than 1 bar. By this way, consumption and noise are minimized while maintaining at the same time a fine and uniform atomization of the composition of the present invention.

Preferably, the used amount of the composition of the present invention is in the range from 1 to 50 ml, more preferably from 1 to 20 ml, for each delivery.

By this way, a low sprayed liquid volume is able to reduce the fume production and air pollution, and also the defects caused by porosity gas generated by fumes, thereby increasing the quality of die-casting products.

### Detailed description of the invention.

### Composition 1.

The Composition 1 of the present invention comprised 15 grams (15%) of a carbonic ester of formula O=C[O-(CH₂)₁₅-CH₃]₂; 25 grams (25%) of a oleic acid and myristic acid mixture, 35 grams (35%) of a synthetic ester of formula C₄H₇[-O-(CH₂)₁₅-CH₃]₃ having a dynamic viscosity of 45 mm²/sec when measured at 40 °C, and 25 grams (25%) of a polydimethylsiloxane-based polymeric resin having about 200 silicon atoms. The above mentioned percentages refer to parts by weight per 100 parts by weight of the whole composition.

The above mentioned carbonic ester has a dynamic viscosity of 30 mm²/sec when measured at 40 °C, while the dynamic viscosity of the whole Composition 1 was 65 mm²/sec when measured at 40 °C. In addition, the flash point (COC) of the composition 1 was 300 °C.

100 grams of the Composition 1 were prepared by adding, in order, the carbonic ester, synthetic ester, myristic and oleic acids mixture and the polymeric resin in the amounts indicated above as components of the composition at a temperature of 40 °C. The mixture was stirred for about 3 hours in a stainless steel cylindrical type mixer, provided with a paddle stirrer and water/steam heating/cooling. The obtained composition was then cooled at room temperature by natural way or through a water jacket, after that the obtained product was drummed.

### Composition 2.

The Composition 2 of the present invention was obtained in a similar way to the above described Composition 1, by varying the ingredient amounts. In fact, the Composition 2 comprised 10 parts by weight of a carbonic ester of formula O=C[O-(CH₂)₁₅-CH₃]₂, 30 parts by weight of a oleic acid and myristic acid, 30 parts by weight of a synthetic ester of formula C₄H₇[-O-(CH₂)₁₅-CH₃]₃ having a dynamic viscosity of 45 mm²/sec when measured at 40 °C, and 30 parts by weight of a polymeric resin.

### Composition 3.

The Composition 3 of the present invention was obtained in a similar way to the above described Compositions 1 and 2, by varying the ingredient amount. In fact, the Composition 3 comprised 18 parts by weight of a carbonic ester of formula O=C[O-(CH₂)₁₅-CH₃]₂, 20 parts by weight of a oleic acid and myristic acid mixture, 40 parts by weight of a synthetic ester of formula C₄H₇[-O-(CH₂)₁₅-CH₃]₃ having a dynamic viscosity of 45 mm²/sec when measured at 40 °C and 22 parts by weight of a polymeric resin.

### Composition 4.

The Composition 4 of the present invention was obtained in a similar way to the above described Composition 1, the only difference being the linoleic acid and linoleic acid mixture instead of the oleic acid and myristic acid mixture, in equal amounts.

The whole dynamic viscosity of the Compositions 2, 3 and 4 were of 70 mm²/sec when measured at 40 °C. In addition, the flash point (COC) of said compositions was 290 °C.

The compositions 1-4 of the present invention were then used one by one in a casting process comprising the steps of a) delivering the composition into a mold, b) injecting an alloy, such as a zamak, c) opening the mold when solidification of the alloy and of the compositions of the present invention occurred, and) removing the cast.

In particular, in step a) a sprayer was used to create a very fine atomization of the composition of the present invention, creating droplets with diameters in the order of microns. Said sprayer comprised mixing nozzles able to check the pressure of said composition and of the air independently one each other. The air pressure was lower than 1 bar to minimize consumption and noise, while maintaining at the same time a fine and uniform atomization of the product.

The amount used in the composition of the present invention was of 5 ml for each delivery. The lower amount of sprayed liquid produced smaller quantities of fumes and air pollution, and decreased to a minimum level the defects caused by the gas porosity generated by the fumes, thereby increasing the quality of die-cast products.

The index viscosity of the compositions of the present invention, in no case lower than 140, allowed the process stability with regard to the amount of sprayed product. The high flash point of the compositions of the present invention allowed to safely work with the mold also at high temperatures of the mold itself, for example about 400 °C - 450 °C, without any fire danger.

The use of the compositions of the present invention also allowed to obtain a uniform, free of micro welding, and resistant to temperature variation distribution, as well as an excellent lubrication of all the moving parts of the casting process, a friction reduction that the cast meets during mold filling, a barrier forming which prevents the welding between the alloy and the mold, the easy removal of the solidified casting, and the reduction of trace presence on the casting and of fouling in the mold and/or in the platen mold. In addition, the thermal dissipation was facilitated, allowing for an easy management of cooling program and a relevant reduction of the production cycle.

## Claims

1. A substantially anhydrous composition comprising:
a) at least a carbonic ester, having a dynamic viscosity in the range between 3 and 90 mm²/sec when measured at 40 °C;
b) at least an organic acid, saturated or unsaturated, having from 12 to 22 carbon atoms;
c) at least a synthetic ester having a dynamic viscosity in the range between 25 and 90 mm²/sec when measured at 40 °C;
d) at least a silicon polymer-based resin;
an wherein said composition has:
- a dynamic viscosity in the range between 45 and 180 mm²/sec when measured at 40°C, and
- a flashpoint (COC) not lower than 250°C.

2. Composition according to claim 1, wherein said composition has a dynamic viscosity in the range between 45 and 140 mm²/sec when measured at 40°C.

3. Composition according to any of preceding claims, wherein said composition has a viscosity index greater than or equal to 140 and a pour point greater than or equal to -10°C.

4. Composition according to any preceding claims, wherein said carbonic ester has a dynamic viscosity in the range between 5 and 60 mm²/sec when measured at 40°C.

5. Composition according to any preceding claims, wherein said carbonic ester is represented by general formula I:
O=C[-O-(CH₂)ₓ-CH₃]₂ (I)
wherein x is an integer ranging from 11 to 19.

6. Composition according to any preceding claims, wherein said organic acid is:
a) a saturated organic acid represented by general formula II:
CH₃-(CH₂)_{y}-COOH (II)
wherein y is an integer ranging from 11 to 21,
b) a monounsaturated organic acid, having 13 to 23 carbon atoms, or
c) a polyunsaturated organic acid, having from 13 to 23 carbon atoms.

7. Composition according to any preceding claims, wherein said organic acid is selected from the group consisting in oleic acid, myristic acid, isostearic acid, palmitic acid and erucic acid, and mixtures thereof.

8. Composition according to any preceding claims, wherein said synthetic ester has a dynamic viscosity in the range between 30 and 75 mm²/sec when measured at 40 °C.

9. Composition according to any preceding claims, wherein said synthetic ester is represented by general formula III:
C₄H₇ [O - CO-((CH₂)_{z}-CH₃]₃ (III)
wherein z is an integer ranging from 11 to 17.

10. Composition according to any preceding claims, wherein said silicon polymer-based resin has a chain having from 50 to 400 silicon atoms, preferably between 100 and 350 silicon atoms, more preferably between 150 and 300 silicon atoms.

11. Composition according to any preceding claims, wherein said silicon polymer-based resin is represented by general formula IV: 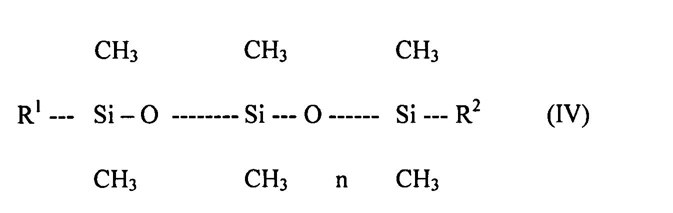 wherein n is an integer from 150 to 300 and R¹ and R² are independently one each other alkyl groups having from 2 to 10 carbon atoms.

12. Casting process comprising the steps of: a) delivering into a mold a composition as the one described in any one of claims 1-11, b) injecting an alloy in said mold, c) removing the obtained cast.

13. Casting process according to claim 12, wherein in said step a) the delivery of said composition is made by mixing nozzles able to check the pressure of said composition and of the air independently one each other.

14. Casting process according to claim 13, wherein said air pressure is lower than 3 bar.
